# EUROPÄISCHE PATENTSCHRIFT

(11) **EP 1 630 928 B1**
(45) Veröffentlichungstag und Bekanntmachung des Hinweises auf die Patenterteilung: **30.04.2008**
(21) Anmeldenummer: 05017360.8
(22) Anmeldetag: 10.08.2005
(51) Int. Cl.: H02J 7/14

(54) **Anordnung zur Stromversorgung eines Fahrzeugs**
Vehicle power supply arrangement
Arrangement d'alimentation pour un véhicule

(30) Priorität: 23.08.2004 DE 102004040863; 29.11.2004 DE 102004057661
(43) Veröffentlichungstag der Anmeldung: 01.03.2006
(73) Patentinhaber: Power Hybrid Deutschland GmbH, 47574 Goch (DE)
(72) Erfinder: Sonntag, Manfred, 47226 Duisburg (DE)
(74) Vertreter: Schoenen, Norbert

(56) Entgegenhaltungen:
- DE-A1- 4 028 861
- DE-A1- 4 031 920
- US-A- 5 705 859
- PATENT ABSTRACTS OF JAPAN Bd. 1997, Nr. 06, 30. Juni 1997 (1997-06-30) & JP 09 046818 A (ISUZU CERAMICS KENKYUSHO:KK), 14. Februar 1997 (1997-02-14)

## Beschreibung

Die Erfindung betrifft eine Anordnung zur Stromversorgung eines Fahrzeugs, insbesondere zur Versorgung des Bordnetzes und zum Aufladen einer Starterbatterie, mit einem elektrischen Generator, welcher bei Kraftfahrzeugen und auch in dieser Anmeldung "Lichtmaschine" genannt wird, mit einem Antriebsmotor für das Fahrzeug ("Fahrzeugmotor"), insbesondere mit einem Verbrennungsmotor und besonders bevorzugt mit einem Otto- oder Dieselmotor, wobei ein als Elektromotor ausgebildeter Zusatzmotor zum zumindest zeitweisen, alleinigen oder zusätzlichen, Antreiben der Lichtmaschine und eine Energiequelle, insbesondere ein oder mehrere Kondensatoren und/oder eine Zusatzbatterie, zur zumindest zeitweisen Stromversorgung bei nicht angetriebener oder entfallender Lichtmaschine vorgesehen sind.

Die Anordnung ist für beliebige Fahrzeuge, Land-, Wasser- oder Luftfahrzeuge oder sonstige Fahrzeuge einsetzbar. Besonders bevorzugt sind aber Kraftfahrzeuge und dabei insbesondere Personenkraftwagen.

Zur Stromversorgung des Bordnetzes eines Kraftfahrzeuges nach dem Stand der Technik steht zur Stromversorgung des Bordnetzes eines Kraftfahrzeuges als Lichtmaschine ein Drehstromgenerator in ständiger Antriebsverbindung mit dem Antriebsmotor für das Fahrzeug, meistens über einen Normal-Keilriemen mit einem Übersetzungsverhältnis zwischen 1 : 2 und 1 : 3 im Pkw-Bereich und bis zu 1 : 5 im Nutzkraftwagenbereich. Der Generator wird also ständig vom Antriebsmotor angetrieben, versorgt mit der abgegebenen elektrischen Energie das Bordnetz und lädt die Starterbatterie auf

Eine Anordnung der eingangs genannten Art ist aus Patent Abstracts of Japan Bd. 1997, Nr. 06, 30. Juni 1997 (1997-06-30) & JP 09 046818 A (Isuzu Ceramics Kenkyusho:KK), 14. Februar 1997 (1997-02-14) bekannt. Hier sind Generatoren an beiden Enden der Kurbelwelle des Verbrennungsmotors angebracht. Die von den Generatoren erzeugte Energie lädt einen Kondensator und eine Batterie. Ferner wird ein weiterer Generator von einer am Auspuff angebrachten Energie-Rückgewinnungs-Turbine angetrieben. Bei hoher Belastung wird die gespeicherte Energie abgegeben. Bei geringer Belastung wird die gespeicherte Energie verwendet, um die Lebensdauer und den Wirkungsgrad zu vergrößern.

Der Erfindung liegt die Aufgabe zugrunde, eine Anordnung zur Stromversorgung der eingangs genannten Art zu entwikkeln, mit der der Kraftstoffverbrauch des Fahrzeugs deutlich gesenkt wird. Dazu soll nur eine einfache, schnelle Nachrüstung bestehender Stromversorgungs-Anordnungen bzw. bestehender Fahrzeuge mit Verbrennungsmotoren oder anderen Antrieben, vorzugsweise mit Otto- und Dieselmotoren, mit Hilfe eines kostengünstigen Umrüstsatzes erforderlich sein. Die verbesserte Anordnung zur Stromversorgung soll eine äußerst einfache und problemlose Bedienung erlauben, die sich nicht oder kaum von der Bedienung der bekannten üblichen Fahrzeuge unterscheidet.

Diese Aufgabe wird bei der Anordnung der eingangs genannten Art erfindungsgemäß dadurch gelöst, dass der Elektromotor nur bei laufendem Fahrzeugmotor betätigbar ist. Eine Entladung der Energiequelle durch ein unbeabsichtigtes Laufenlassen des Elektromotors bei stehendem Fahrzeugmotor ist damit nicht möglich.

Der Erfindung liegt die folgende Erkenntnis zugrunde: Der für Kraftfahrzeuge notwendige Drehstromgenerator muss bei sämtlichen im Fahrbetrieb vorkommenden Drehzahlen des Antriebsmotors ausreichend Strom an das Bordnetz liefern und sicherstellen, dass die Starterbatterie als Energiespeicher immer genügend gut geladen ist. Alle angeschlossenen Verbraucher müssen ausreichend mit Strom versorgt werden. Zusätzliche Leistungsreserven sind außerdem notwendig zum schnellen Auf- bzw. Nachladen der Batterie auch bei einer Vielzahl eingeschalteter Dauerverbraucher mit einem hohen Stromverbrauch. Die Generatorspannung muss außerdem über den gesamten Drehzahlbereich des Fahrzeugmotors unabhängig vom Lastzustand des Generators konstant gehalten werden.

Diese Anforderungen führen dazu, dass der Generator im Normalbetrieb überdimensioniert ist, damit er auch in Extremfällen noch eine ausreichende Leistung liefern kann. Die Überdimensionierung, bezogen auf den am häufigsten auftretenden Normalfall mit durchschnittlichem Stromverbrauch, und die dauernde Antriebsverbindung mit dem Fahrzeugmotor macht einen erheblichen Anteil am Kraftstoffverbrauch aus.

Erfindungsgemäß wird der Fahrzeugmotor nun dadurch entlastet, dass er nicht permanent (alleine) die Lichtmaschine antreiben muss, so dass Kraftstoff gespart wird. Alternativ treiben sowohl der Fahrzeugmotor als auch der Zusatzmotor - gleichzeitig oder abwechselnd - die Lichtmaschine an. Damit entlastet der Zusatzmotor den Fahrzeugmotor, damit der Fahrzeugmotor nicht die volle Leistung zum Antreiben der Lichtmaschine aufbringen muss und auf diese Weise weniger Kraftstoff benötigt.

Besonders bevorzugt ist eine feste Antriebsverbindung zwischen dem Fahrzeugmotor und der Lichtmaschine in an sich bekannter Weise, da in diesem Fall keine zusätzlichen Änderungen an dieser Antriebsverbindung erforderlich sind. In dieser besonders bevorzugten Ausgestaltung der Erfindung treiben in bestimmten Fahrsituationen sowohl der Zusatzmotor als auch der Fahrzeugmotor die Lichtmaschine an, wodurch der Fahrzeugmotor entlastet und der Kraftstoffverbrauch reduziert wird. Die genannten besonderen Fahrsituationen liegen insbesondere bei einer hohen Belastung des Fahrzeugmotors vor, wenn dieser ein hohes Drehmoment bzw. eine hohe Leistung aufbringen muss.

Zum besonders einfachen, problemlos bedienbaren und kostengünstigen zeitweisen Entkoppeln der Antriebsverbindung zwischen dem Fahrzeugmotor und der Lichtmaschine wird vorgeschlagen, dass der Zusatzmotor über einen Freilauf mit der Lichtmaschine verbunden ist. Außerdem wird vorgeschlagen, dass der Fahrzeugmotor ebenfalls über einen Freilauf und/oder über eine Magnetkupplung mit der Lichtmaschine verbunden ist.

Mit anderen Worten, die Lichtmaschine wird entweder vom Fahrzeugmotor oder vom Zusatzmotor angetrieben, je nachdem, welcher der beiden Motoren eine höhere Drehzahl hat. Eine drehzahlunabhängiges Lösen und Verbinden der Antriebsverbindung des Fahrzeugmotors mit der Lichtmaschine kann in einer besonderen Ausführung über eine Magnetkupplung erreicht werden, um auch bei hohen Fahrzeuggeschwindigkeiten und damit in der Regel auch hohen Drehzahlen des Fahrzeugmotors eine Entkopplung der Lichtmaschine vom Fahrzeugmotor zu erreichen. Dann wird die Lichtmaschine durch eine Turbine in ausreichender Weise angetrieben. Nähere Einzelheiten finden sich weiter unten in dieser Anmeldung.

Der Zusatzmotor ist als ein Elektromotor ausgebildet, der insbesondere beim Anfahren des Fahrzeuges aus dem Stand zur Entlastung des Fahrzeugmotors beiträgt. Beim Anfahren muss der Fahrzeugmotor nämlich relativ hohe Drehmomente aufbringen. Wenn der Fahrzeugmotor in dieser Situation die Lichtmaschine nicht antreiben muss, wird er deutlich entlastet, was sich in einem entsprechend niedrigeren Kraftstoffverbrauch widerspiegelt. Für diesen relativ kurzen Zeitraum kann die Lichtmaschine problemlos von dem als Elektromotor ausgebildeten Zusatzmotor angetrieben werden.

Dabei ist es günstig, wenn der Elektromotor von einer Zusatzbatterie gespeist wird.

Als vorteilhaft hat sich weiterhin herausgestellt, wenn der Elektromotor nur beim Anfahren aus dem Stand und/oder bei Bergfahrten betätigbar ist. Gerade in diesen Fällen muss der Fahrzeugmotor ein hohes Drehmoment zum Antreiben des Fahrzeugs aufbringen und die Entlastung durch den Wegfall des Lichtmaschinenantriebs ist besonders effektiv.

Ferner ist es auch von Vorteil, wenn die Zusatzbatterie eine kleinere Kapazität als die Starterbatterie aufweist. Sämtliche erfindungsgemäßen Zusatzaggregate sind nämlich erheblich kleiner ausgelegt und haben eine kleinere Kapazität als die bereits vorhandenen Aggregate, wie Lichtmaschine und Starterbatterie. Die kleinere Auslegung der Zusatzaggregate reicht völlig aus und ermöglicht einen platzsparenden Einbau bei günstigen Anschaffungskosten. Dementsprechend wird auch vorgeschlagen, dass der Zusatzmotor eine kleinere Leistung als die Lichtmaschine aufweist.

Eine Energieeinsparung und damit ein geringerer Kraftstoffverbrauch lässt sich auch bei mittleren Fahrzeuggeschwindigkeiten erreichen, wenn nämlich nach einer weiteren vorteilhaften Ausgestaltung der Erfindung der Zusatzmotor als eine Turbine ausgebildet ist, die vom Fahrtwind und/oder vom Abgas angetrieben wird. Neben dem Antreiben der Lichtmaschine hat die Turbine einen weiteren Zweck, da die Zusatzbatterie von einem Hilfsgenerator aufladbar ist, welche ebenfalls von der Turbine angetrieben wird. Auch hier ist es aus den bereits genannten Gründen günstig, wenn der Hilfsgenerator eine kleinere Leistung als die Lichtmaschine aufweist.

Bei mittleren Geschwindigkeiten, z. B. bei Geschwindigkeiten von mehr als 40 km/h bei einem Pkw ist es problemlos möglich, die Lichtmaschine des Fahrzeugs und den Hilfsgenerator zum Aufladen der Zusatzbatterie von der Turbine anzutreiben, die vorne am Fahrzeug im Bereich des Kühlers angebracht ist und selber vom Fahrtwind angetrieben wird. Alternativ oder zusätzlich kann die Turbine auch im letzten Drittel der Auspuffanlage angebracht sein und von den nach außen strömenden Abgasen angetrieben werden. Die Entlastung des Fahrzeugmotors infolge des Wegfalls des Lichtmaschinenantriebs führt bei mittleren Geschwindigkeiten zu einer erheblichen Verringerung des Kraftstoffverbrauchs.

Alternativ kann auch die Zusatzbatterie von einer Brennstoffzelle aufladbar sein, die mit einem Gasreservoir in an sich bekannter Weise verbunden ist. Die erheblich geringeren Kosten für das Gas im Vergleich zum üblichen Kraftstoff für Kraftfahrzeuge wie Benzin oder Dieseltreibstoff senken die Verbrauchskosten für das Fahrzeug noch stärker.

Bekannt sind Aufladegeräte für Verbrennungsmotoren, die durch Verdichtung der zur Verbrennung des Kraftstoffes benötigten Luft den Luftdurchsatz eines Motors bei gleichbleibendem Hubraum und gleichbleibender Motordrehzahl erhöhen und damit eine höhere Leistungsdichte sowie einen geringeren Kraftstoffverbrauch ermöglichen. In Anwendung dieses bekannten Prinzips ist es erfindungsgemäß günstig, wenn eine von der Turbine angetriebene Aufladeeinrichtung zum Verdichten der Zuluft für den Verbrennungsmotor vorgesehen ist. Möglich und günstig ist auch eine von der Zusatzbatterie gespeiste Aufladeeinrichtung (Lüfter) zum Verdichten der Zuluft.

In einer weiteren erfindungsgemäßen Variante kann die Lichtmaschine auch entfallen. Falls die bereits oben genannte Brennstoffzelle eine ausreichende Leistung abgibt, ist es nämlich von sehr hohem Vorteil, wenn eine solche Brennstoffzelle anstelle der Lichtmaschine vorgesehen ist. Das Bordnetz und die Starterbatterie werden also ausschließlich über die Brennstoffzelle mit elektrischem Strom versorgt. Der Zusatzmotor entfällt. Die erheblich geringeren Kosten für das Gas, nämlich für das so genannte "Autogas", führen zu einer besonders starken Reduzierung der laufenden Fahrzeugkosten.

Falls andererseits die genannte Turbine eine entsprechend hohe Leistung, beispielsweise mehr als 1000 Watt aufweist, ist es von Vorteil, wenn die Turbine, angetrieben durch den Fahrtwind und/oder das Abgas oder auf sonstige Weise, mit der Antriebswelle des Fahrzeugmotors, z. B. der Kurbelwelle, verbunden ist und damit in direkter Weise den Fahrzeugmotor entlastet.

In einer besonders vorteilhaften Ausgestaltung der Erfindung wird vorgeschlagen, dass bei geringem Stromverbrauch die Antriebsverbindung der Lichtmaschine von dem Antriebsmotor des Fahrzeugs lösbar ist und dass als Energiequelle zur zusätzlichen Stromversorgung des Bordnetzes eine Hilfslichtmaschine vorgesehen ist, die insbesondere ständig in Antriebsverbindung mit dem Antriebsmotor des Fahrzeugs steht. Bevorzugt ist dabei, dass die Hilfslichtmaschine eine geringere Leistung als die Lichtmaschine aufweist.

Wenn nicht viele elektrische Verbraucher eingeschaltet sind und der Stromverbrauch des Bordnetzes daher nicht sehr hoch ist, wird in dieser Ausgestaltung die normale übliche Lichtmaschine vom Antriebsmotor des Fahrzeugs abgekoppelt, beispielsweise mittels einer Magnetkupplung vom Verbrennungsmotor abgekoppelt, und steht dann still. Die notwendige Stromversorgung des Bordnetzes erfolgt dann durch eine zusätzliche, vorzugsweise leistungsmäßig geringer dimensionierte so genannte Hilfslichtmaschine. Diese kleinere Hilfslichtmaschine verbraucht wegen ihrer geringeren Leistung entsprechend weniger Antriebsenergie des Verbrennungsmotors und führt daher zu einer deutlichen Kraftstoffersparnis. Wird dann in einem anderen Fahrzustand eine höhere elektrische Leistung vom Bordnetz gefordert, z. B. in der Dunkelheit bei Regen, wenn die Scheinwerfer und die Scheibenwischer und evtl. auch andere stärkere Stromverbraucher eingeschaltet sind, wird der erhöhte Stromverbrauch von einer entsprechenden Regel- und Steuereinheit erkannt, welche dann die übliche Lichtmaschine mit der deutlich höheren Leistung wieder an den Verbrennungsmotor koppelt. Vorzugsweise läuft die Hilfslichtmaschine immer mit. Es kann aber auch vorgesehen sein, dass nur entweder die Hilfslichtmaschine oder die normale, leistungsstarke Lichtmaschine in Betrieb ist.

Im Folgenden werden Ausführungsbeispiele der Erfindung anhand von Zeichnungen näher beschrieben. Es zeigen
- Figur 1: ein schematisches Schalt- und Funktionsbild einer ersten erfindungsgemäßen Anordnung zur Stromversorgung eines Fahrzeugs und
- Figur 2: eine Darstellung entsprechend Figur 1 mit einer alternativen erfindungsgemäßen Anordnung.

In allen Zeichnungen haben gleiche Bezugszeichen die gleiche Bedeutung und werden daher gegebenenfalls nur einmal erläutert.

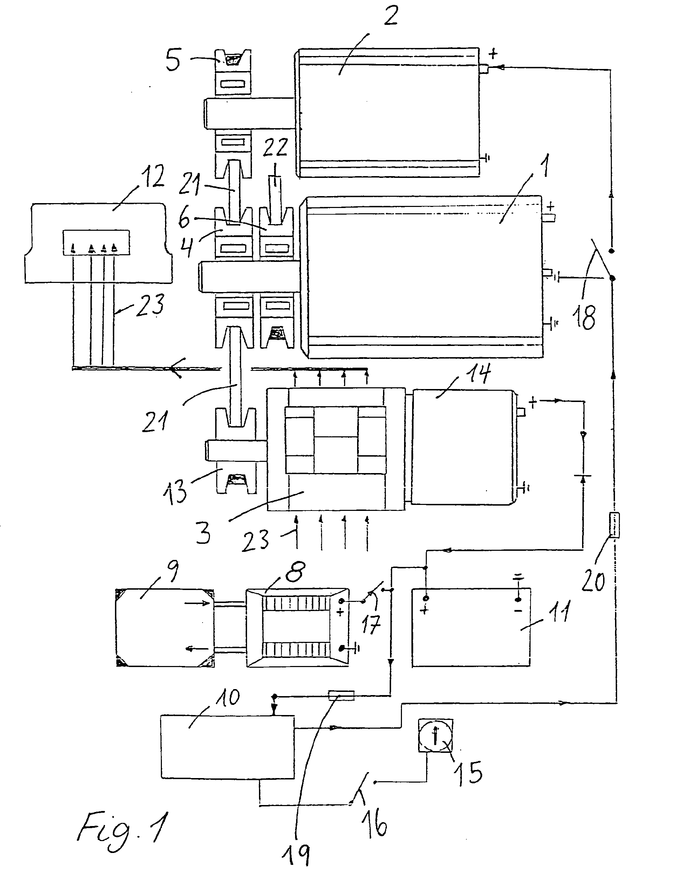

In der Darstellung nach Figur 1 wird eine Lichtmaschine 1 von einem Verbrennungsmotor 12 über einen Keilriemen 22 und einen Freilauf 6 angetrieben. Es kann sich hier um eine übliche Lichtmaschine mit beispielsweise 14 V, 55 Ah und 900 bis 1400 W Leistung handeln. Die übliche Starterbatterie ist in an sich bekannter Weise mit der Lichtmaschine elektrisch verbunden, aber in der Zeichnung nicht dargestellt.

Erfindungsgemäß ist als Zusatzmotor ein kleiner Elektromotor 2 vorgesehen, der über einen Freilauf 5, einen Keilriemen 21 und einen auf der Lichtmaschinenwelle sitzenden Freilauf 4 zum Antrieb mit der Lichtmaschine 1 verbunden ist. Teil 5 kann ein Freilauf oder nur ein einfaches Antriebsrad sein. Wenn Teil 5 ein Antriebsrad ohne Freilauf ist, fällt der Hilfsgenerator 14 weg und der Elektromotor 2 wird als Generator betrieben und von der Turbine 3 angetrieben und lädt die Zusatzbatterie 11 auf.

Der Elektromotor 2 wird von einer kleinen Zusatzbatterie 11 über eine Steuereinheit 10, Sicherungen 19 und 20 und über eine Relais 18 mit elektrischer Energie versorgt. Der Elektromotor kann beispielsweise eine Leistung von 400 bis 800 W haben. Als Zusatzbatterie kann beispielsweise eine Batterie mit 12 V und 36 Ah eingesetzt werden. Die Steuereinheit 10 enthält eine Zeitschaltung zum Abschalten des Elektromotors nach Ablauf einer bestimmten Zeit. Das Relais 18 ist nur dann geschlossen, wenn der Verbrennungsmotor 12 läuft.

Die gesamte erfindungsgemäße Anordnung kann nur dann in Betrieb genommen werden, wenn die Zündung über das Zündschloss 15 eingeschaltet ist. Eine manuelle Notabschaltung ist mit einem Wipp-Schalter 16 möglich. Eine Leuchtdiode im Schalter 16 zeigt den Betrieb der erfindungsgemäßen Anordnung an.

Als weiterer zusätzlicher Antrieb für die Lichtmaschine 1 ist eine Windturbine 3 vorgesehen, die über ein Antriebsrad 13, den Keilriemen 21 und den Freilauf 4 die Lichtmaschine 1 antreibt.

Die Turbine 3 ist im Frontbereich des Fahrzeuges untergebracht und wird vom Fahrtwind 23 angetrieben, welcher in der Turbine verdichtet und als Turboaufladung in den Verbrennungsmotor 12 weitergeleitet wird. Gegebenenfalls kann die von der Turbine 3 abgegebene Luft von einem Lüfter zusätzlich komprimiert werden, welche von der Zusatzbatterie 11 angetrieben wird. Dieser Lüfter ist in den Figuren nicht eingezeichnet.

Die Turbine treibt außerdem einen kleinen Hilfsgenerator 14 an, der beispielsweise 300 W abgibt und die Zusatzbatterie 11 auflädt.

Eine weitere zusätzliche Möglichkeit zur vorteilhaften Ausgestaltung der Erfindung liegt in der Anordnung einer Brennstoffzelle 8, die von einem Gastank 9 versorgt wird und elektrischen Strom zum Aufladen der Zusatzbatterie und/oder zur Versorgung des Bordnetzes liefert. Der Schalter 17 an der Brennstoffzelle 8 ist nur dann geschlossen, wenn die Zündung eingeschaltet ist.

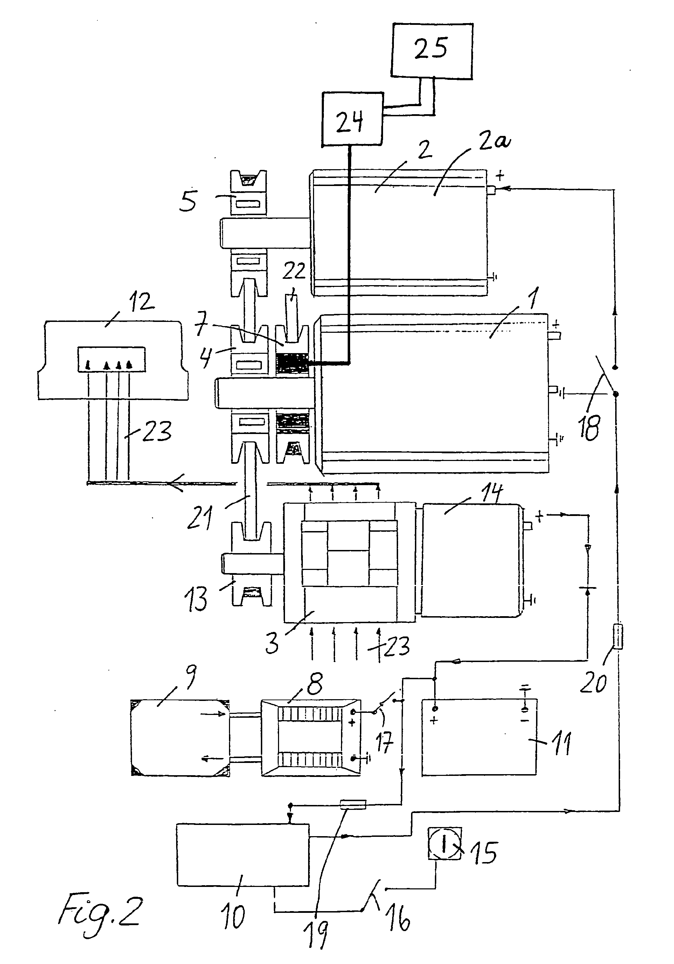

Figur 2 zeigt eine ähnliche Anordnung wie Figur 1, aber der Freilauf 6 ist hier ersetzt durch eine Magnetkupplung 7.

Zur Nachrüstung von Fahrzeugen, insbesondere von Pkws sind nur ein kleiner Elektromotor 2, die Zusatzbatterie 11, die Steuereinheit 10 sowie die Turbine 3 mit Hilfsgenerator 14 erforderlich. Auch bei hohen und höchsten Geschwindigkeiten des Fahrzeugs lässt sich erfindungsgemäß eine Hybrid-Fahrweise mit dem Effekt der Energieeinsparung realisieren. Bei dem bisherigen Hybrid-Antrieben war dies nicht oder nicht ohne weiteres möglich.

Die erfindungsgemäße Anordnung hat sich in Praxistests bewährt. Bei einem Personenkraftwagen mit einer Motorleistung von 37 kW wurde damit der Kraftstoffverbrauch um 40 % gesenkt. Der Erfinder sieht die Ursache in der hohen abgegebenen Leistung der Lichtmaschine von etwa 1 kW, für die etwa 3 bis 4 kW Motorleistung aufzubringen sind.

Die erfindungsgemäße Anordnung arbeitet folgendermaßen:

Nach dem Anlassen des Motors wird selbsttätig auch die erfindungsgemäße Stromversorgungsanordnung in Betrieb genommen. Beim Anfahren des Fahrzeugs aus dem Stand, wobei hier der Einfachheit halber von einem Personenkraftwagen mit einem Ottomotor ausgegangen wird, erhält die Steuereinheit 10 ein Signal vom Gaspedal und schaltet den Elektromotor 2 ein. Dieser dreht die Lichtmaschine 1 mit höherer Drehzahl als der Verbrennungsmotor. Infolge des Freilaufs 6 wird die Lichtmaschine während dieser Anfahrphase nur von dem Elektromotor 2, nicht aber vom Verbrennungsmotor angetrieben. Gerade in dieser Fahrsituation wird von einem Ottomotor ein sehr hohes Drehmoment bei ungünstig niedrigen Drehzahlen verlangt und der Kraftstoffverbrauch ist besonders hoch. Die Entlastung durch den Elektromotor 2 führt daher zu einer deutlichen Kraftstoffersparnis. Nach 5 Sekunden wird der Elektromotor 2 vom Steuergerät 10 abgeschaltet und der Ottomotor treibt in üblicher Weise die Lichtmaschine an.

Ausnahmsweise bleibt der Elektromotor 2 länger eingeschaltet, wenn das Fahrzeug einen Berg hochfährt. In diesem Fall muss der Ottomotor über eine etwas längere Zeit das höhere Drehmoment bei relativ niedrigen Drehzahlen aufbringen. Über ein Neigungsrelais erhält die Steuereinheit 10 ein Signal und lässt den Elektromotor so lange laufen, bis das Fahrzeug den Berg hochgefahren ist. Nach maximal 5 Minuten wird der Elektromotor jedoch abgeschaltet, um die Zusatzbatterie 11 nicht leerlaufen zu lassen, und der Ottomotor übernimmt den Antrieb der Lichtmaschine alleine.

Auf jeden Fall wird in diesen erfindungsgemäßen Varianten die Lichtmaschine 1 immer in ausreichender Weise angetrieben, so dass die Stromversorgung für das Bordnetz aufrechterhalten bleibt.

Bei höheren Geschwindigkeiten, beispielsweise bei 40 bis 50 km/h wird die Turbine 3 vom Fahrtwind 23 so stark angetrieben, dass sie nun den Antrieb der Lichtmaschine 1 übernimmt. Über den Freilauf 5 bleibt der Elektromotor dabei in Ruhe. Alternativ oder zusätzlich kann auch eine in der Abgasleitung angeordnete Turbine vorgesehen sein, die ebenfalls die Lichtmaschine 1 antreibt. Zusätzlich lädt die Turbine 3 über den Hilfsgenerator 14 die Zusatzbatterie 11 auf.

Möglich ist auch eine Ausführungsform der Erfindung ohne die Zusatzbatterie 11. In diesem Fall versorgt eine in der Abgasleitung angeordnete Turbine über einen Hilfsgenerator unmittelbar den Elektromotor 2, auch beim Anfahren des Fahrzeugs.

In einer weiteren Variante wird auch bei sehr hohen Geschwindigkeiten des Fahrzeugs mit entsprechend hohen Drehzahlen des Verbrennungsmotors 12 eine Kraftstoffersparnis erreicht. In diesem Fall ist anstelle des Freilaufes 6 eine Magnetkupplung 7 vorgesehen. Bei entsprechend hohen Geschwindigkeiten des Fahrzeugs bzw. hohen Drehzahlen des Motors 12 wird die Magnetkupplung und damit die Verbindung zwischen der Lichtmaschine und dem Motor gelöst. Ohne diese Magnetkupplung würde der Verbrennungsmotor bei den erhöhten Drehzahlen die Lichtmaschine wieder antreiben, nämlich dann, wenn die Drehzahl des Verbrennungsmotors die Drehzahl der Turbine übersteigt. Diese erfindungsgemäß ungünstige Arbeitsweise wird mit der Magnetkupplung verhindert.

Ferner ist es auch möglich, auf Ablageflächen im Fahrzeug Solarmodule vorzusehen, welche die Zusatzbatterie 11 und/oder auch die Starterbatterie aufladen.

In einer weiteren vorteilhaften Variante ist eine Brennstoffzelle 8 vorgesehen, die mit Flüssiggas aus einem Gastank 9 betrieben wird und Strom sowohl für die Zusatzbatterie 11 als auch für das Bordnetz liefert. In diesem Fall entfällt der Hilfsgenerator 14. Der zum Aufladen der Zusatzbatterie 11 nicht benötigte Strom aus der Brennstoffzelle kann zum Aufladen der Starterbatterie verwendet werden bzw. in das Bordnetz eingespeist werden. Dabei kann der Elektromotor 2 permanent mitlaufen und die Lichtmaschine 1 entlasten.

Falls die Brennstoffzelle mit einer relativ hohen Leistung ausgestattet ist und beispielsweise über 1000 W abgibt, kann die herkömmliche Lichtmaschine 1 völlig entfallen. Die Stromversorgung erfolgt dann nur über die Brennstoffzelle. Die Turbine 3 kann in diesem Fall an der Kurbelwelle des Verbrennungsmotors angebracht werden. Der kleine Elektromotor 2 entfällt.

Günstig in der Erfindung ist auch die Verwendung von besonders effektiven Turbinen 3, also von Turbinen mit einem sehr hohem Wirkungsgrad.

Zum Umrüsten eines herkömmlichen Fahrzeugs ist es nur notwendig, den Elektromotor 2, die Turbine 3 mit Hilfsgenerator 14 und die Zusatzbatterie 11 im Motorraum einzubauen und die Freiläufe 4, 6 auf der Welle der Lichtmaschine zu montieren und über die Keilriemen 21 und 22 mit dem Elektromotor 2, der Turbine 3 und mit dem Verbrennungsmotor 12 zu verbinden. Nach dem elektrischen Anschluss des Steuergerätes 10 und den anderen elektrischen Verbindungen ist die Umrüstung bereits erfolgt.

Alternativ oder zusätzlich ist die folgende erfindungsgemäße Variante möglich: Der Elektromotor 2 entfällt. Stattdessen wird bei niedriger Fahrzeuggeschwindigkeit bzw. beim Anfahren die Magnetkupplung 7 gelöst und das Bordnetz von Kondensatoren als Überbrückung während mehrerer Sekunden mit Strom versorgt, bis die weiter unten genannte Turbine durch den Fahrtwind soviel Leistung aufbringt, um die Lichtmaschine anzutreiben. In dieser Variante entfallen die Zusatzbatterie 11, der Elektromotor 2 und der Hilfsgenerator 14. Die Kondensatoren werden innerhalb weniger Sekunden vom Bordnetz wieder aufgeladen. Dies kann über die Steuereinheit 10 geschaltet werden. Auch diese erfindungsgemäße Variante wurde mit Erfolg in der Praxis getestet.

Weiterhin können die Kondensatoren auch über den Hilfsgenerator 14 aufgeladen werden. Dann kann die Nachladung über das Bordnetz wegfallen oder beide Möglichkeiten zur Nachladung werden genutzt.

In einer besonders vorteilhaften Ausführungsform der Erfindung ist die Lichtmaschine 1 über die Magnetkupplung 7 mit dem Verbrennungsmotor 12 verbunden. Die Magnetkupplung wird von einer Steuereinheit, die entsprechend dem so genannten, kommerziell erhältlichen "Batteriewächter" aufgebaut ist, betätigt. Bei einem erhöhten Stromverbrauch wird die Lichtmaschine an den Verbrennungsmotor angekoppelt, bei geringerem Stromverbrauch von dem Verbrennungsmotor gelöst. Zusätzlich ist an Stelle des Elektromotors 2 eine Hilfslichtmaschine 2a vorgesehen, welche über eine feste Verbindung mit dem Verbrennungsmotor verbunden ist. Der Freilauf 4 entfällt also in dieser Ausführungsform der Erfindung. Die Hilfslichtmaschine 2a läuft daher immer mit. Sie erzeugt auch dann einen elektrischen Strom für das Bordnetz, wenn die Hauptlichtmaschine 1 abgeschaltet ist. Der Hilfsgenerator 14 entfällt in dieser Ausgestaltung. Der "Batteriewächter" ist in Figur 2 mit der Bezugsziffer 24 eingezeichnet. Er ist mit der üblichen Starterbatterie 25 elektrisch verbunden.

Für fast alle PKWs kann der gleiche Umrüstsatz verwendet werden. Die dadurch möglichen hohen Stückzahlen bei der Produktion des Umrüstsatzes senken zusätzlich die Kosten der Umrüstung.

### Bezugszeichenliste

- 1: Lichtmaschine
- 2: Elektromotor (Zusatzmotor)
- 2a: Hilfslichtmaschine
- 3: Windturbine (Zusatzmotor)
- 4: Freilauf
- 5: Freilauf
- 6: Freilauf
- 7: Magnetkupplung
- 8: Brennstoffzelle
- 9: Gastank
- 10: Steuereinheit
- 11: Zusatzbatterie
- 12: Verbrennungsmotor
- 13: Antriebsrad
- 14: Hilfsgenerator
- 15: Zündschloss
- 16: Schalter
- 17: Schalter
- 18: Relais
- 19: Sicherung
- 20: Sicherung
- 21: Keilriemen
- 22: Keilriemen
- 23: Fahrtwind, Turboaufladung
- 24: "Batteriewächter"
- 25: Starterbatterie

## Patentansprüche

1. Anordnung zur Stromversorgung eines Fahrzeugs, insbesondere zur Versorgung des Bordnetzes und zum Aufladen einer Starterbatterie, mit einem elektrischen Generator ("Lichtmaschine"), mit einem Antriebsmotor für das Fahrzeug ("Fahrzeugmotor"), insbesondere mit einem Verbrennungsmotor und besonders bevorzugt mit einem Otto- oder Dieselmotor,
wobei ein als Elektromotor ausgebildeter Zusatzmotor (2, 3) zum zumindest zeitweisen, alleinigen oder zusätzlichen, Antreiben der Lichtmaschine (1) und eine Energiequelle, insbesondere ein oder mehrere Kondensatoren und/oder eine Zusatzbatterie, zur zumindest zeitweisen Stromversorgung bei nicht angetriebener oder entfallender Lichtmaschine vorgesehen sind,
**dadurch gekennzeichnet,**
**dass** der Elektromotor (2) nur bei laufendem Fahrzeugmotor (12) betätigbar ist.

2. Anordnung nach Anspruch 1,
**dadurch gekennzeichnet,**
**dass** eine feste Antriebsverbindung zwischen dem Fahrzeugmotor (12) und der Lichtmaschine (1) vorgesehen ist.

3. Anordnung nach Anspruch 1 oder 2,
**dadurch gekennzeichnet,**
**dass** der Zusatzmotor (2, 3) über einen Freilauf (4, 5) mit der Lichtmaschine (1) verbunden ist.

4. Anordnung nach Anspruch 1 oder 3,
**dadurch gekennzeichnet,**
**dass** der Fahrzeugmotor (12) über einen Freilauf (6) und/oder über eine Magnetkupplung (7) mit der Lichtmaschine (1) verbunden ist.

5. Anordnung nach Anspruch 4,
**dadurch gekennzeichnet,**
**dass** der Elektromotor (2) von einer Zusatzbatterie (11) gespeist wird.

6. Anordnung nach Anspruch 4 oder 5,
**dadurch gekennzeichnet,**
**dass** der Elektromotor (2) nur beim Anfahren aus dem Stand und/oder bei Bergfahrten betätigbar ist.

7. Anordnung nach Anspruch 5 oder 6,
**dadurch gekennzeichnet,**
**dass** die Zusatzbatterie (11) eine kleinere Kapazität als die Starterbatterie aufweist.

8. Anordnung nach einem der vorhergehenden Ansprüche,
**dadurch gekennzeichnet,**
**dass** der Zusatzmotor (2, 3) eine kleinere Leistung als die Lichtmaschine (1) aufweist.

## Claims

1. Arrangement for supplying voltage to a vehicle, in particular for supplying the on-board electrical system and for charging up a starting battery, with an electrical generator ("alternator"), with a drive engine for the vehicle ("vehicle engine"), in particular with an internal combustion engine and particularly preferably with an Otto or diesel engine, in which there is an additional motor (2, 3) constructed as an electric motor for at least temporarily, solely or additionally, driving the alternator (1), and an energy source, in particular one or more capacitors and/or an additional battery, for at least temporarily supplying voltage when the alternator is not being driven or is absent,
**characterized in that**
the electric motor (2) can only be activated when the vehicle engine (12) is running.

2. Arrangement according to Claim 1,
**characterized in that**
a fixed drive connection is provided between the vehicle engine (12) and the alternator (1).

3. Arrangement according to Claim 1 or 2,
**characterized in that**
the additional motor (2, 3) is connected to the alternator (1) via a freewheel mechanism (4, 5).

4. Arrangement according to Claim 1 or 3,
**characterized in that**
the vehicle engine (12) is connected to the alternator (1) via a freewheel mechanism (6) and/or via a magnet coupling (7).

5. Arrangement according to Claim 4,
**characterized in that**
the electric motor (2) is supplied by an additional battery (11).

6. Arrangement according to Claim 4 or 5,
**characterized in that**
the electric motor (2) can only be activated when driving off from a standing start and/or when driving uphill.

7. Arrangement according to Claim 5 or 6,
**characterized in that**
the additional battery (11) has a smaller capacity than the starting battery.

8. Arrangement according to one of the previous claims,
**characterized in that**
the additional motor (2, 3) has a lower power than the alternator (1).

## Revendications

1. Agencement pour l'alimentation électrique d'un véhicule, en particulier pour l'alimentation du réseau de bord et pour le chargement d'une batterie de démarrage, comprenant un générateur électrique ("dynamo"), un moteur d'entraînement pour le véhicule ("moteur du véhicule"), en particulier un moteur à combustion et avec une préférence particulière un moteur à allumage commandé ou un moteur diesel,
un moteur supplémentaire (2, 3) conçu comme moteur électrique étant prévu pour l'entraînement ou moins temporaire, unique ou supplémentaire, de la dynamo (1) et une source d'énergie, en particulier un ou plusieurs condensateurs et/ou une batterie supplémentaire étant prévus pour l'alimentation électrique au moins temporaire lorsque la dynamo n'est pas entraînée ou est supprimée,
**caractérisé en ce que**
le moteur électrique (2) ne peut être actionné que lorsque le moteur du véhicule (12) fonctionne.

2. Agencement selon la revendication 1,
**caractérisé en ce que**
une liaison d'entraînement fixe est prévue entre le moteur du véhicule (12) et la dynamo (1).

3. Agencement selon la revendication 1 ou 2,
**caractérisé en ce que**
le moteur supplémentaire (2, 3) est relié par une roue libre (4, 5) à la dynamo (1).

4. Agencement selon la revendication 1 ou 3,
**caractérisé en ce que**
le moteur du véhicule (12) est relié par une roue libre (6) et/ou un accouplement magnétique (7) à la dynamo (1).

5. Agencement selon la revendication 4,
**caractérisé en ce que**
le moteur électrique (2) est alimenté par une batterie supplémentaire (11).

6. Agencement selon la revendication 4 ou 5,
**caractérisé en ce que**
le moteur électrique (2) peut être actionné uniquement en cas de démarrage à partir de la position arrêtée et/ou lors de trajet en montée.

7. Agencement selon la revendication 5 ou 6,
**caractérisé en ce que**
la batterie supplémentaire (11) présente une capacité plus petite que la batterie de démarrage.

8. Agencement selon l'une quelconque des revendications précédentes,
**caractérisé en ce que**
le moteur supplémentaire (2, 3) présente une plus petite puissance que la dynamo (1).
